# FASCICULE DE BREVET EUROPEEN

(11) **EP 4 141 403 B1**
(45) Date de publication et mention de la délivrance du brevet: **11.10.2023**
(21) Numéro de dépôt: 22183373.4
(22) Date de dépôt: 06.07.2022
(51) Int. Cl.: G01M 13/025, G01M 7/02

(54) **BANC D'ESSAIS POUR AMORTISSEUR D'UN ROTOR**
PRÜFSTAND FÜR ROTORDÄMPFER
TEST BENCH FOR SHOCK ABSORBER OF A ROTOR

(30) Priorité: 31.08.2021 FR 2109090
(43) Date de publication de la demande: 01.03.2023
(73) Titulaire: Airbus Helicopters, 13725 Marignane Cedex (FR)
(72) Inventeur: JAUFFRET, Laurent, 13880 VELAUX (FR); LAMBERT, Christophe, 13190 ALLAUCH (FR)
(74) Mandataire: GPI Brevets

(56) Documents cités:
- CN-A- 111 380 672
- CN-B- 107 192 562
- CN-U- 207 850 712
- DE-A1- 2 936 403
- DE-A1- 3 811 771

## Description

La présente invention concerne un banc d'essais pour un amortisseur d'un rotor.

Sur un rotor d'hélicoptère, un dispositif d'amortissement peut relier une pale au moyeu du rotor ou peut relier deux pales consécutives entre elles. Un tel dispositif d'amortissement est notamment connu sous l'expression « amortisseur de traînée » ou parfois « adaptateur de fréquences à amortissement incorporé ». Le terme « amortisseur » est utilisé par la suite.

Un tel amortisseur est sujet à diverses contraintes physiques en vol. En particulier, un tel amortisseur est notamment soumis à la force centrifuge due à sa rotation autour de l'axe de rotation du rotor, à des forces introduites par la ou les pales articulées à l'amortisseur, à des efforts internes intrinsèques, à des contraintes thermiques dues à l'échauffement de composants internes de l'amortisseur et à une convection thermique créée lors de la rotation du rotor.

La reproduction en laboratoire des diverses contraintes subies lors d'une phase de test est délicate.

Outres les différences d'installation, les amortisseurs peuvent avoir des technologies différentes de type hydraulique, élastomérique, ou viscoélastique, voire différentes vitesses de rotation et différentes attitudes dans l'espace. Ces différences peuvent rendre difficile la conception d'un banc d'essais permettant de tester divers amortisseurs.

Un banc d'essais connu comporte une machine de tests en fatigue pouvant étirer et comprimer l'amortisseur. Des organes pesants sont pendus au bout de câbles attachés à l'amortisseur pour simuler certains effets de la force centrifuge.

Un tel banc d'essais est intéressant, mais une reproduction fidèle des conditions d'utilisation réelles sur un aéronef peut être délicate à obtenir, notamment en ce qui concerne la force centrifuge, les comportements dynamiques, les phénomènes de précession, les phénomènes thermiques subis.

Les documents CN 107 192 562 B, CN 207 850 712 U, DE 38 11 771 A1, DE 29 36 403 A1 et CN 111 380 672, bien que concernant des bancs d'essais pour amortisseur, sont éloignés de la problématique de la présente invention.

La présente invention a alors pour objet de proposer un banc d'essais visant à obtenir des conditions d'essais plus proches des conditions d'utilisation réelles.

L'invention vise donc un banc d'essais configuré pour tester un amortisseur de traînée. Le banc d'essais comporte un premier support rendu mobile en rotation autour d'un premier axe par un moteur, le banc d'essais comportant un deuxième support mobile en rotation autour d'un deuxième axe, le deuxième axe étant désaxé par rapport au premier axe, donc non coaxiaux, selon au moins un axe géométrique, le banc d'essais comprenant un premier connecteur solidaire du premier support et un deuxième connecteur solidaire du deuxième support, le premier connecteur et le deuxième connecteur étant décalés du premier axe et du deuxième axe, le premier connecteur et le deuxième connecteur étant en regard l'un de l'autre selon un axe d'agencement et étant configurés pour porter ledit amortisseur selon ledit axe d'agencement.

Dès lors, l'amortisseur à tester est attaché au premier connecteur et au deuxième connecteur. Eventuellement, le premier connecteur et le deuxième connecteur sont dimensionnés pour que l'amortisseur soit positionné par rapport au premier axe de la même manière que sur un rotor réel devant être équipé de cet amortisseur.

Le premier support est ensuite mis en rotation dans le référentiel du banc d'essais autour du premier axe par le moteur. Le premier support peut être mis en rotation à la vitesse de rotation du rotor réel devant être équipé de l'amortisseur à tester. Le deuxième support est mis en rotation par rapport au référentiel autour du deuxième axe indirectement via le moteur et le premier support et/ou directement via sa propre motorisation. Dans tous les cas, le premier support et le deuxième support peuvent être déplacés conjointement, en phase.

Un réglage d'excentricité E permet au premier axe et au deuxième axe de ne pas être coaxiaux. En raison du décalage du deuxième axe par rapport au premier axe, l'amortisseur est sollicité en compression et en traction lors de son déplacement autour du premier axe et du deuxième axe. La course d'une tige de travail de l'amortisseur relativement à son corps évolue d'une valeur égale à plus ou moins l'excentricité E sur un tour.

Le banc d'essais peut alors permettre d'obtenir des conditions d'essais identiques aux conditions subies en vol sur un rotor réel lorsque les vitesses de rotation et l'agencement de l'amortisseur sont identiques aux conditions réelles. Le banc d'essais permet alors de reproduire le fonctionnement réel de l'amortisseur au sein d'un rotor en le soumettant aux mêmes mouvements et à la même force centrifuge. En particulier, les effets de la force centrifuge sur des constituants mobiles et des joints de l'amortisseur sont reproduits. Le banc d'essais permet donc d'obtenir des résultats d'essais probants et fiables.

Le banc d'essais peut par ailleurs comprendre une ou plusieurs des caractéristiques qui suivent, prises seules ou en combinaison.

Selon une possibilité, le banc d'essais peut comporter une goulotte annulaire fixe de collecte de liquide, la goulotte annulaire entourant le premier support et le deuxième support dans un plan radial orthogonal au premier axe.

La goulotte entoure un volume cylindrique dans lequel évolue l'amortisseur à tester sous l'impulsion au moins du moteur. En présence d'un amortisseur comprenant un fluide hydraulique, la goulotte permet de recueillir le fluide en présence d'une éventuelle fuite. La force centrifuge tend en effet à diriger le fluide vers la goulotte.

Dès lors, l'étanchéité de l'amortisseur peut être testée dans des conditions identiques aux conditions réelles. La goulotte permet de récupérer le fluide éventuellement éjecté lors de l'essai suite à une fuite dans un but de propreté et/ou pour quantifier la fuite afin de pouvoir apporter à l'amortisseur un correctif efficace si besoin.

Eventuellement, ledit banc d'essais peut comporter un senseur de mesure mesurant une présence de fluide dans la goulotte ou dans un drain de la goulotte, ledit senseur de mesure communiquant avec un contrôleur d'arrêt apte à piloter un arrêt automatique dudit moteur.

Le terme « drain » désigne un objet ou un système permettant de diriger le fluide récolté vers le senseur de mesure. Le drain peut comprendre un orifice de la goulotte, au moins une tuyauterie, et/ou un récipient...

Le senseur de mesure peut comprendre, par exemple, une jauge mesurant le volume de fluide récolté dans un récipient ou une tuyauterie. Le cas échéant, le contrôleur peut piloter un arrêt automatique du moteur pour arrêter l'essai en présence d'une fuite jugée importante, par exemple en présence d'un volume de fluide récolté supérieur à un seuil de volume.

Selon une possibilité compatible avec les précédentes, le banc d'essais peut comporter au moins un senseur de surveillance à choisir dans une liste comprenant : un senseur de température à agencer sur l'amortisseur, un senseur de déplacement à agencer sur l'amortisseur, un senseur de pression à agencer sur l'amortisseur, un senseur d'efforts à agencer sur l'amortisseur.

Au moins un senseur de surveillance peut mesurer la valeur d'un paramètre représentatif du fonctionnement de l'amortisseur testé.

Selon une possibilité compatible avec les précédentes, le banc d'essais peut comporter au moins un palier portant un arbre solidaire en rotation du deuxième support, ledit banc d'essais comprenant un collecteur tournant électrique ou optique solidaire dudit arbre et un collecteur non tournant, le collecteur tournant étant relié à au moins un senseur de surveillance.

Chaque senseur de surveillance transmet alors un signal de surveillance au collecteur tournant qui le transfère au collecteur non tournant. Le collecteur non tournant peut à son tour transmettre le signal au contrôleur évoqué précédemment ou autres.

Le collecteur tournant et le collecteur non tournant peuvent former conjointement un collecteur à balais ou optique par exemple. Le collecteur tournant et le collecteur non tournant peuvent permettre d'alimenter électriquement un équipement électrique tournant conjointement avec l'amortisseur testé, tel qu'une caméra évoquée par la suite par exemple.

Eventuellement, l'arbre peut être creux. Selon une possibilité, le collecteur non tournant peut alors être agencé dans l'arbre pour faciliter son agencement.

Selon une possibilité compatible avec les précédentes, le premier support et le deuxième support peuvent être synchronisés en rotation en phase.

Selon une possibilité compatible avec les précédentes, le banc d'essais peut comporter une transmission reliant le premier support au deuxième support, la transmission étant déformable pour au moins conférer un degré de liberté restreinte au deuxième support par rapport au premier support.

En outre, la transmission peut être déformable au moins en flexion. Le premier support et le deuxième support sont ainsi accouplés au moyen d'une transmission autorisant un déplacement radial et/ou axial relatif entre ce premier support et ce deuxième support. Le premier axe peut être fixe dans un référentiel du banc d'essais alors que le deuxième axe peut être déplacé par rapport au châssis selon au moins un axe géométrique pour obtenir une excentricité E réglable entre le premier axe et le deuxième axe. La transmission permet de lier le premier support et le deuxième support en autorisant un tel désaxage et un déplacement angulaire relatif entre eux par rapport au premier axe tout en assurant un mouvement homocinétique entre un tube lié en entrée au premier support et un arbre lié en sortie au deuxième support.

La translation du deuxième axe par rapport au premier axe et donc du deuxième support par rapport au premier support permet de déterminer la course imposée à l'amortisseur. Par exemple, pour obtenir une course de ± 2.5 mm (millimètres) imposée à l'amortisseur, le deuxième support est désaxé par rapport au premier support de 2.5 mm.

La transmission peut avoir une longueur, parallèlement au premier axe, maximisée afin d'atteindre un désaxage angulaire maximum au regard des déformations admissibles de parties flexibles de cette transmission.

De manière complémentaire ou alternative, le banc d'essais peut comporter une motorisation mettant en rotation le deuxième support.

La motorisation permet d'avoir plus de latitude dans l'introduction des efforts dans l'amortisseur ou de faire varier les efforts subis sur un tour, par exemple pour simuler une rafale de vent.

Selon une possibilité compatible avec les précédentes, le premier axe peut être fixe dans un référentiel du banc d'essais, le deuxième support pouvant être porté par un portant mobile par rapport à un socle fixe dans le référentiel du banc d'essais pour désaxer le deuxième axe par rapport au premier axe.

Un désaxage précis peut ainsi être obtenu relativement facilement en déplaçant le portant par rapport au socle.

Par exemple, le banc d'essais peut comporter un arbre solidaire en rotation du deuxième support et guidé en rotation autour du deuxième axe par au moins un palier, le palier étant solidaire du portant, une position du portant par rapport au socle étant réglable selon au moins un axe non parallèle au premier axe pour ajuster un désaxage du deuxième axe par rapport au premier axe.

Selon une possibilité compatible avec les précédentes, le premier connecteur et le deuxième connecteur peuvent comporter chacun une chape traversée par une broche qui peut s'étendre parallèlement au premier axe pour traverser un embout à rotule de l'amortisseur.

Deux embouts à rotule de l'amortisseur peuvent être brochés rapidement et facilement respectivement au premier connecteur et au deuxième connecteur.

Selon une possibilité compatible avec les précédentes, le premier support et le deuxième support peuvent être imbriqués l'un dans l'autre dans un plan radial orthogonal au premier axe, un desdits premier et deuxième supports traversant un passage de l'autre support orthogonalement au premier axe.

Afin que les efforts introduits dans le premier support et le deuxième support ne les déforment pas indument pour ne pas fausser l'essai, le premier support et le deuxième support peuvent s'étendre autant que faire se peut dans le plan radial passant le cas échéant par le centre de rotation des embouts à rotules de l'amortisseur. A cet effet, le premier support et le deuxième support peuvent être imbriqués l'un dans l'autre, sans contact.

Dans le même but, le premier support et le deuxième support peuvent avoir des raideurs choisies pour que les efforts introduits dans le premier support et le deuxième support n'impactent pas la course de l'amortisseur, à un pourcent près par exemple.

Selon une possibilité compatible avec les précédentes, le premier connecteur et le deuxième connecteur peuvent être amovibles.

Le banc d'essais peut être utilisé pour tester divers amortisseurs.

Dès lors, le premier support et le deuxième support peuvent être immuables quel que soit l'amortisseur testé. Par contre, le banc d'essais peut alors comprendre divers ensembles de premier connecteur/deuxième connecteur, chaque ensemble correspondant à au moins un type d'amortisseur. Le passage d'un amortisseur à tester à un autre amortisseur peut alors s'accompagner du changement des premier et deuxième connecteurs.

Eventuellement, ce changement s'accompagne d'une modification du désaxage du premier axe et du deuxième axe, et/ou d'un changement d'une vitesse de rotation de consigne du moteur.

Alternativement, le premier connecteur et le premier support peuvent forme une pièce monolithique et/ou le deuxième connecteur et le deuxième support peuvent former une pièce monolithique.

Selon une possibilité compatible avec les précédentes, le banc d'essais peut comporter un ventilateur orienté vers le premier support et le deuxième support.

Un ventilateur peut être utilisé pour diriger un flux d'air, préférentiellement réchauffé ou refroidi par rapport à l'air ambiant avec un échangeur thermique, vers l'amortisseur afin de reproduire au plus près les conditions thermiques réelles susceptibles d'être subies par l'amortisseur.

Selon une possibilité compatible avec les précédentes, le banc d'essais peut comporter une caméra mobile en rotation autour du premier axe ou du deuxième axe et orientée au moins vers un espace compris entre le premier connecteur et le deuxième connecteur.

Le terme « caméra » désigne un appareil pour capturer une succession d'images.

Une caméra peut être, par exemple, portée par un support ou un connecteur afin de capter des images de l'amortisseur. La caméra permet ainsi de générer des images de l'amortisseur durant le test pour pouvoir observer le comportement de l'amortisseur dans son propre référentiel.

L'invention et ses avantages apparaîtront avec plus de détails dans le cadre de la description qui suit avec des exemples donnés à titre illustratif en référence aux figures annexées qui représentent :
la figure 1, une vue en trois dimensions du banc d'essais selon un premier point de vue,
la figure 2, une vue en trois dimensions du premier support et du deuxième support,
la figure 3, une vue en trois dimensions d'un banc d'essais de la figure 1 selon un deuxième point de vue,
la figure 4, une vue en coupe d'un banc d'essais suivant un plan perpendiculaire à l'axe AX1 de la figure 1,
la figure 5, une vue en coupe d'une transmission suivant un plan passant par l'axe AX1 de la figure 1,
la figure 6, une vue en coupe du premier support et du deuxième support et de la transmission entre les deux, et
la figure 7, une vue en trois dimensions d'un banc d'essais explicitant son fonctionnement.

Les éléments présents dans plusieurs figures distinctes sont affectés d'une seule et même référence.

Trois directions X, Y et Z orthogonales les unes par rapport aux autres sont représentées sur les figures et représentent un référentiel du banc d'essais.

La direction X est dite longitudinale. Une autre direction Y est dite transversale. Enfin, une troisième direction Z est dite d'élévation. Le terme « longitudinal » est relatif à toute direction parallèle à la première direction X. Le terme « transversal » est relatif à toute direction parallèle à la deuxième direction Y. L'expression « en élévation » est relative à toute direction parallèle à la troisième direction Z.

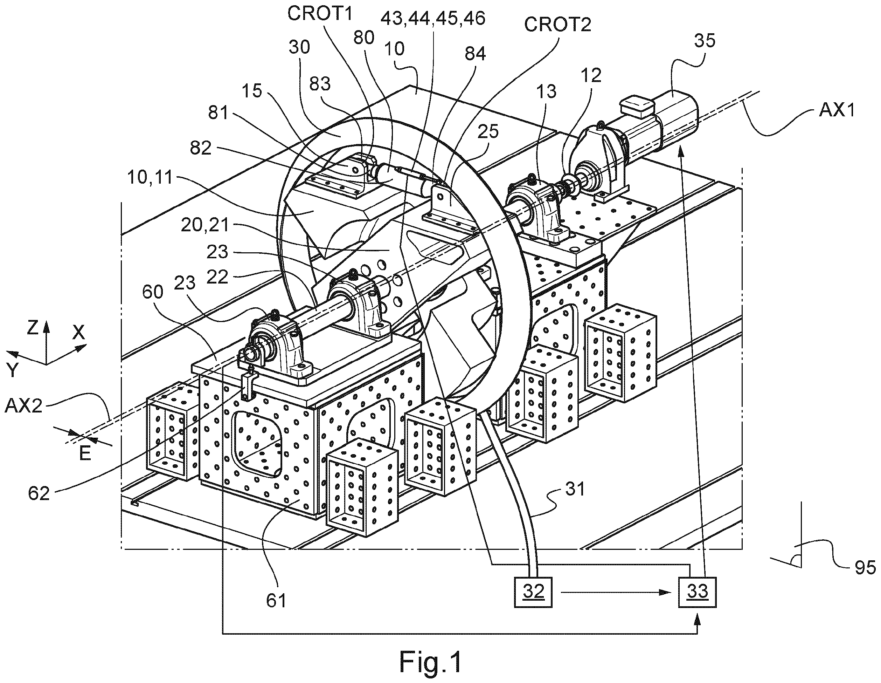

La figure 1 présente un banc d'essais 1 selon l'invention. Le banc d'essais 1 a pour fonction de tester un amortisseur 80 de traînée dans des conditions proches des conditions réelles rencontrées sur un rotor d'aéronef, voire identiques. Un tel amortisseur 80 peut s'étendre d'un premier embout 83 à un deuxième embout 84. Le premier embout 83 et le deuxième embout 84 peuvent être des embouts à rotule autorisant des rotations autour respectivement de deux centres de rotation CROT1, CROT2. Par exemple, l'amortisseur 80 à tester comporte un corps 81 solidaire d'un des embouts 83,84 et une tige de travail 82 solidaire de l'autre embout 83,84.

A cet effet, le banc d'essais 1 comporte un premier support 10 mis en rotation, dans ledit référentiel, autour d'un premier axe AX1 de rotation par un moteur 35. Par exemple, le premier support 10 est solidaire d'un tube 12 qui s'étend le long du premier axe AX1. Le tube 12 peut être guidé en rotation autour du premier axe AX1 par des premiers paliers 13. Les premiers paliers 13 sont fixés à un sol ou à une table 100 directement ou indirectement via un châssis 63. Par ailleurs, le tube 12 est rendu solidaire d'un arbre de sortie du moteur 35 par des organes usuels. Le moteur 35 peut être un moteur électrique rotatif. Dès lors, une rotation de l'arbre de sortie du moteur 35 entraine une rotation du tube 12 et du premier support 10 autour du premier axe AX1 dans ledit référentiel. Le premier axe AX1 est parallèle à l'axe longitudinal X du référentiel du banc d'essais 1 .

Le banc d'essais 1 comporte de plus un deuxième support 20 mobile en rotation dans ledit référentiel autour d'un deuxième axe AX2. Le deuxième axe AX2 peut être parallèle au premier axe AX1 et à l'axe longitudinal X. De plus, le deuxième axe AX2 peut être désaxé par rapport au premier axe AX1.

Par exemple, le deuxième support 20 est solidaire en rotation d'un arbre 22. L'arbre 22 est guidé en rotation autour du deuxième axe AX2 par des deuxièmes paliers 23 attachés à un portant 60.

Pour désaxer le deuxième axe AX2 par rapport au premier axe AX1 selon au moins un axe géométrique, le premier axe AX1 peut être rendu fixe dans le référentiel du banc d'essais 1 contrairement au deuxième axe AX2. A cet effet, le portant 60 peut être attaché de manière réversible, à l'aide d'au moins une attache 62, à un socle 61 lors d'une phase de test. Le socle 61 peut être une table ou un sol 100 ou peut reposer sur une telle table ou un tel sol 100 selon l'exemple illustré. Par contre, le portant 60 peut être déplacé par rapport au socle 61 lors d'une opération de désaxage. Lors d'une telle opération, un opérateur peut détacher la ou les attaches 62 et peut par exemple faire glisser le portant 60 sur le socle 61 selon l'axe transversal Y pour écarter ou rapprocher latéralement le deuxième axe AX2 du premier axe AX1.

En tout état de cause, le portant 60 peut être déplacé par rapport au socle 61 selon au moins un axe Y, Z ou selon tout axe non parallèle au premier axe AX1 pour obtenir une excentricité E réglable entre le premier axe AX1 et le deuxième axe AX2.

Par ailleurs, le banc d'essais 1 comporte des connecteurs 15, 25 pour attacher l'amortisseur 80 à tester au premier support 10 et au deuxième support 20.

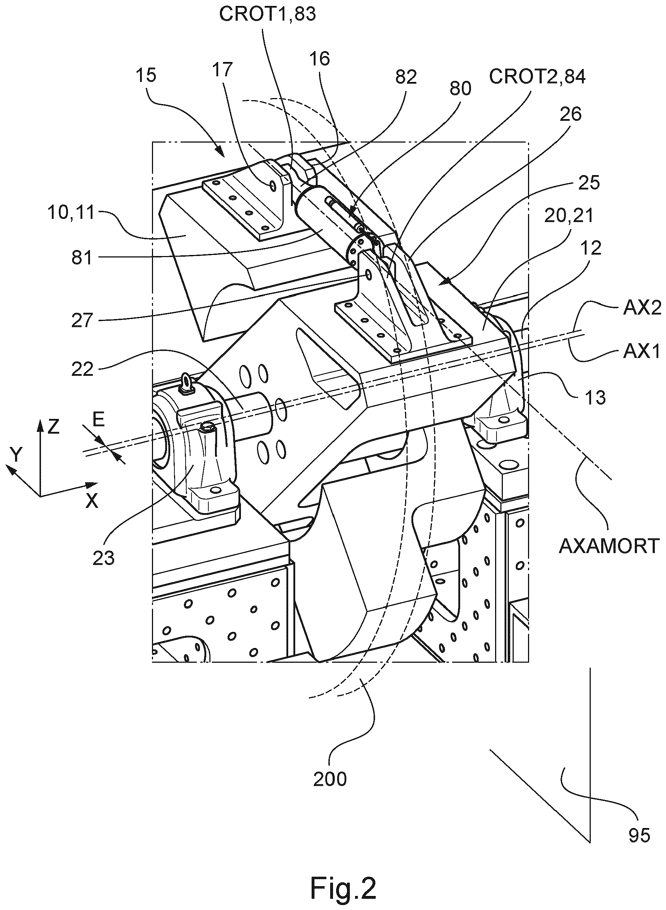

En référence à la figure 2, le premier support 10 est alors solidaire d'un premier connecteur 15. Le premier connecteur 15 peut être un élément constitutif du premier support 10 ou peut être fixé de manière usuelle et réversible au premier support 10, par des vis ou équivalents par exemple.

Par ailleurs, le premier connecteur 15 est apte à être connecté à l'amortisseur 80, et par exemple à son premier embout 83. Par exemple, le premier connecteur 15 comporte une première chape 16 coopérant avec une première broche 17 apte à être insérée dans le premier embout 83. Par exemple, la première chape 16 est une chape femelle à deux joues entre lesquelles est disposé le premier embout 83, la première broche 17 traversant successivement une première joue de la première chape 16, le premier embout 83 puis une deuxième joue de la première chape 16. La première broche 17 peut être parallèle au premier axe AX1.

De même, le deuxième support 20 est alors solidaire d'un deuxième connecteur 25. Le deuxième connecteur 25 peut être un élément constitutif du deuxième support 20 ou peut être fixé de manière usuelle et réversible au deuxième support 20, par des vis ou équivalents par exemple.

Par ailleurs, le deuxième connecteur 25 est apte à être connecté à l'amortisseur 80, et par exemple à son deuxième embout 84. Par exemple, le deuxième connecteur 25 comporte une deuxième chape 26 coopérant avec une deuxième broche 27 apte à être insérée dans le deuxième embout 84. Par exemple, la deuxième chape 26 est une chape femelle à deux joues entre lesquelles est disposé le deuxième embout 84, la deuxième broche 27 traversant successivement une première joue de la deuxième chape 26, le deuxième embout 84 puis une deuxième joue de la deuxième chape 26. La deuxième broche 27 peut être parallèle au premier axe AX1.

Par ailleurs, le premier connecteur 15 et le deuxième connecteur 25 sont en vis-à-vis selon un axe d'agencement AXAMORT le long duquel s'étend l'amortisseur 80. Le cas échéant le premier et le deuxième centres de rotation CROT1, CROT2 sont positionnés sur cet axe d'agencement AXAMORT.

En outre, le premier connecteur 15 et le deuxième connecteur 25 se trouvent dans un volume cylindrique 200 représenté schématiquement. Un plan radial 95 orthogonal au premier axe AX1 coupe ce volume cylindrique, voire passe le cas échéant par le premier centre de rotation CROT1 et le deuxième centre de rotation CROT2.

En outre, le premier connecteur 15 et le deuxième connecteur 25 sont décalés, radialement par rapport au premier axe AX1 à savoir selon des axes orthogonaux au premier axe AX1. L'amortisseur 80 peut ainsi se trouver dans une position par rapport au premier axe AX1 strictement identique à sa position théorique au sein d'un rotor par rapport à l'axe de rotation du rotor.

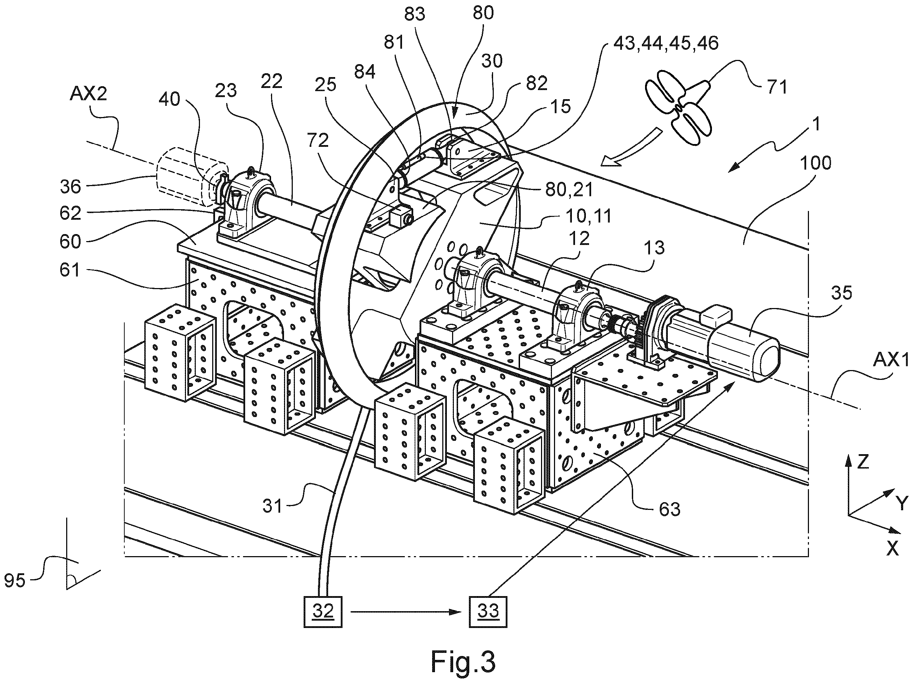

Selon un autre aspect et en référence à la figure 3, le premier support 10 et le deuxième support 20 peuvent être imbriqués l'un dans l'autre dans le plan radial 95 orthogonal au premier axe AX1, sans contact.

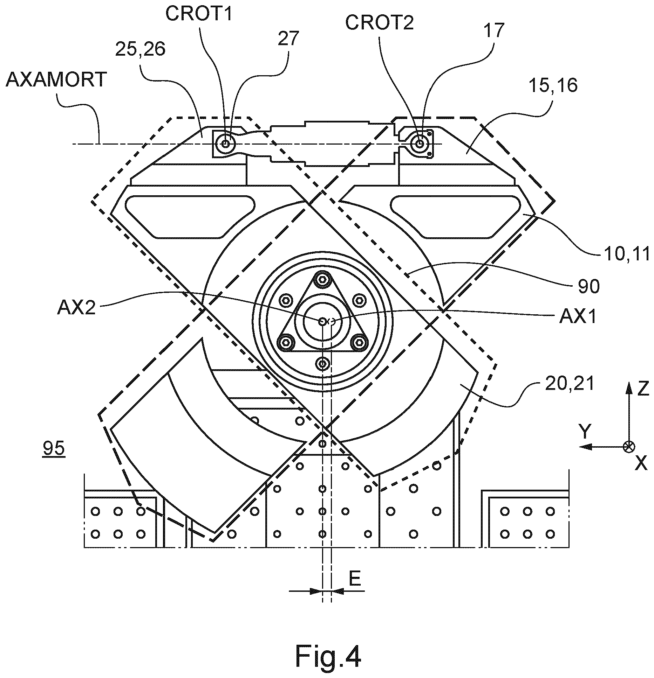

En référence à la figure 4, un support 20 peut traverser un passage 90 de l'autre support 10 radialement par rapport au premier axe AX1. Par exemple, un support 20 peut prendre la forme d'un bras et l'autre support 10 a une forme en U pour être traversé par le bras.

Selon un autre aspect et en référence à nouveau à la figure 3, le banc d'essais 1 peut comporter une goulotte 30 annulaire fixe dans le référentiel du banc d'essais 1. La goulotte 30 entoure le premier support 10 et le deuxième support 20 dans le plan radial 95. Dès lors, la goulotte 10 délimite le volume cylindrique 200 précité dans lequel évolue l'amortisseur 80 durant la phase de test.

Eventuellement, le banc d'essais 1 comporte un senseur de mesure 32 pour évaluer la quantité de fluide récolté par la goulotte 30. Un tel senseur de mesure 32 peut comporter une jauge ou autres. Par exemple, le senseur de mesure 32 évalue la quantité de fluide dans un système de drainage dit plus simplement « drain 31 ». Selon l'exemple illustré, ce drain 31 comporte un tuyau allant d'un orifice disposé au niveau d'un point bas de la goulotte 30 jusqu'à un récipient. Le senseur de mesure 32 émet alors un signal de mesure, électrique ou optique, fonction de la quantité de fluide par exemple dans le récipient.

Un contrôleur 33 reçoit le signal de mesure. Le contrôleur 33 peut décoder le signal de mesure pour en déduire la quantité de fluide récolté et la comparer à un seuil mémorisé. Le contrôleur 33 peut être relié au moteur 35. Dès lors, le contrôleur 33 peut être configuré pour transmettre un signal d'arrêt au moteur 35 si la quantité de fluide mesurée est supérieure au seuil mémorisé.

Le contrôleur 33 peut être muni d'une ou de plusieurs unités de traitement pouvant comprendre par exemple au moins un processeur et au moins une mémoire, au moins un circuit intégré, au moins un système programmable, au moins un circuit logique, ces exemples ne limitant pas la portée donnée à l'expression « unité de traitement ». Le terme processeur peut désigner aussi bien une unité centrale de traitement connue sous l'acronyme CPU, une unité graphique de traitement GPU, une unité digitale connue sous l'acronyme DSP, un microcontrôleur...

Indépendamment de ces aspects, le banc d'essais 1 peut comporter un ventilateur 71. Le ventilateur 71 est dirigé vers le premier support 10 et le deuxième support 20, par exemple sensiblement dans le plan radial 95. Eventuellement, le ventilateur 71 permet également de refroidir ou de réchauffer l'air ambiant. Indépendamment de ces aspects, le banc d'essais 1 peut comporter une caméra 72. La caméra 72 peut être mobile en rotation, dans le référentiel du banc d'essais 1, autour du premier axe AX1 ou du deuxième axe AX2 et orientée au moins vers l'espace compris entre le premier connecteur 15 et le deuxième connecteur 25 pour acquérir des images de l'amortisseur 80. Par exemple, la caméra 72 est fixée à un support 10, 20 ou à un connecteur 15, 25.

Par ailleurs, le banc d'essais 1 peut comporter au moins un senseur de surveillance tel que :
- un senseur de température 43 à agencer sur l'amortisseur 80, telle qu'une sonde de température usuelle par exemple,
- un senseur de déplacement 44 à agencer sur l'amortisseur 80, tel qu'un senseur de positions par exemple,
- un senseur de pression 45 à agencer sur l'amortisseur 80, tel qu'un capteur de pression éventuellement à jauges de contrainte, et/ou
- un senseur d'efforts 46 à agencer sur l'amortisseur 80, tel qu'un capteur d'efforts à jauges de contrainte par exemple.

Pour transmettre des signaux de mesure d'au moins un senseur de surveillance 43-46 et /ou d'au moins une caméra 72 du repère tournant associé à l'amortisseur 80 vers le référentiel du banc d'essais 1, le banc d'essais 1 peut comprendre un collecteur 40.

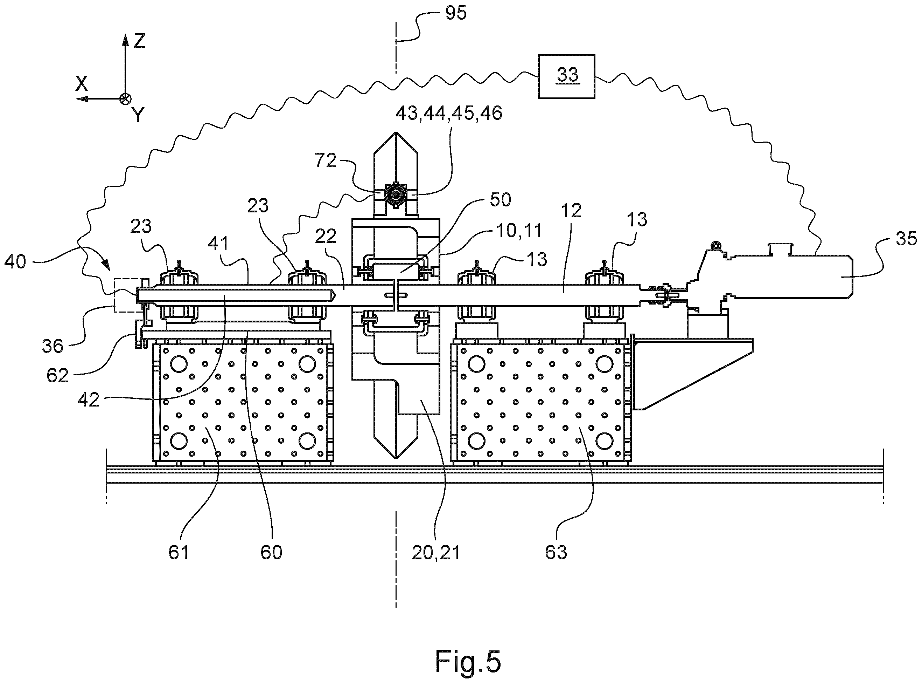

La figure 5 illustre un collecteur 40 muni d'un collecteur tournant 41 électrique ou optique solidaire de l'arbre 22 et d'un collecteur non tournant 42. Le collecteur tournant 41 est relié électriquement ou optiquement à chaque senseur de surveillance 43, 44, 45, 46 et à chaque caméra 72 éventuels. Le collecteur non tournant 42 peut être relié au contrôleur 33 par exemple.

Selon la possibilité illustrée, le collecteur tournant 41 et le collecteur non tournant 42 sont agencés dans l'arbre 22, cet arbre 22 étant creux.

Indépendamment des aspects précédents, le premier support 10 et le deuxième support 20 peuvent être synchronisés en rotation en phase.

Selon une variante, l'arbre 22 peut être solidaire d'une motorisation 36 schématisée avec des traits pointillés sur la figure 5.

De manière complémentaire ou alternative, le banc d'essais 1 peut comporter une transmission 50 reliant le premier support 10 au deuxième support 20. La transmission 50 est déformable pour au moins conférer un degré de liberté au deuxième support 20 par rapport au premier support 10.

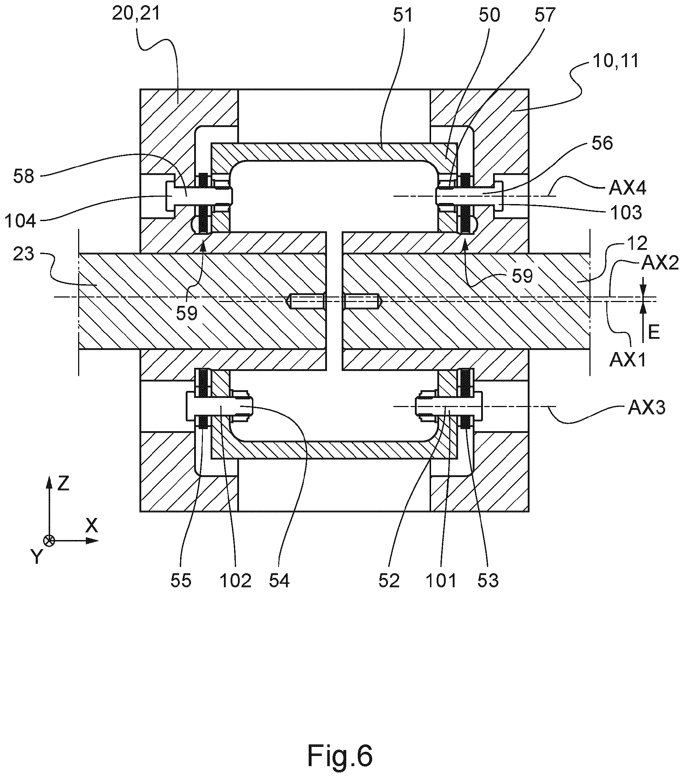

La figure 6 illustre un exemple de transmission 50. La transmission comporte un moyeu 51 connecté au premier support 10 et au deuxième support 20 via des organes déformables pour autoriser un désalignement axial et éventuellement angulaire du premier et du deuxième support 10,20.

Le moyeu 51 peut comporter au moins un premier orifice 52 traversé par une première vis 101, la première vis 101 présentant simplement un jeu de montage avec le moyeu 51. De plus, la première vis 101 traverse un premier organe déformable 53 disposé dans un orifice du premier support 10 pour être vissée à un écrou. Un tel organe déformable 53 peut comporter un anneau flexible en élastomère ou encore un empilage de lames métalliques par exemple.

Dans le prolongement de la première vis 101 et selon un axe de liaison AX3 parallèle au premier axe AX1 se trouve une deuxième vis 102 qui traverse un deuxième organe déformable 55 disposé dans un orifice du deuxième support 20 La deuxième vis 102 traverse un deuxième orifice 54 du moyeu 51 pour être vissée à un écrou, la deuxième vis 102 ayant simplement un jeu de montage avec le moyeu 51. Un tel organe déformable 55 peut comporter un anneau flexible en élastomère ou encore un empilage de lames métalliques par exemple.

Au moins un troisième orifice du premier support 10 est traversé par une troisième vis 103. La troisième vis 103 s'étend selon un axe de connexion AX4 parallèle à l'axe de liaison AX3 et au premier axe AX1. La troisième vis 103 présente simplement un jeu de montage avec le premier support 10. De plus, la troisième vis 103 peut éventuellement traverser un troisième organe déformable 57 disposé dans un orifice du moyeu 51 pour être vissée à un écrou. Un tel organe déformable 57 comporte un anneau flexible en élastomère et un boulon par exemple.

Dans le prolongement de la troisième vis 103 se trouve une quatrième vis 104 qui traverse un quatrième organe déformable 59 disposé dans un orifice du moyeu 51. La quatrième vis 104 traverse un quatrième orifice 58 du deuxième support 20 selon l'axe de connexion AX4 pour être vissée à un écrou, la quatrième vis 104 ayant simplement un jeu de montage avec le deuxième support 20. Un tel organe déformable 59 comporte un anneau en élastomère et un boulon par exemple.

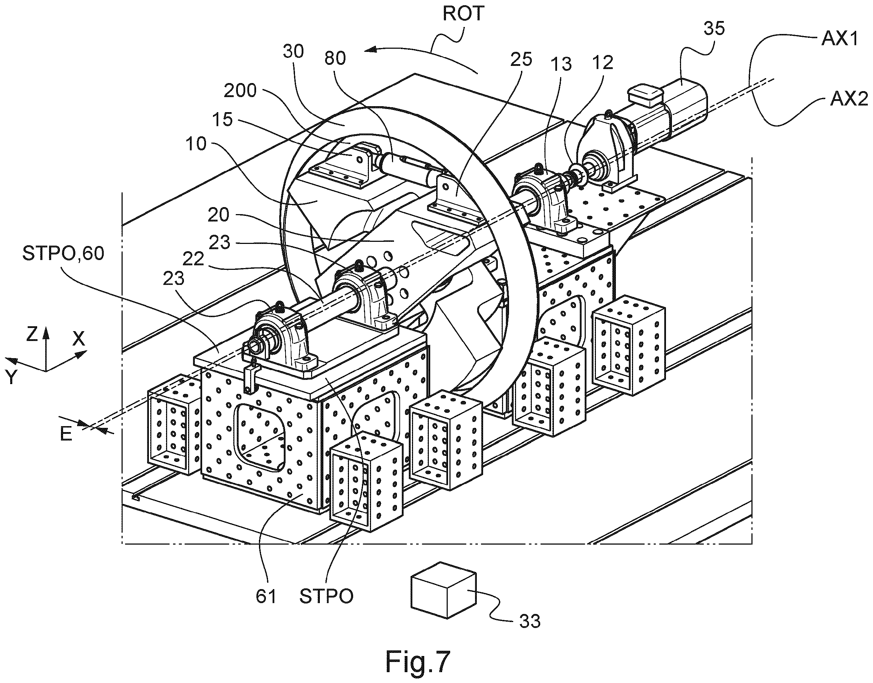

La figure 7 illustre le fonctionnement du banc d'essais.

Lors d'une opération de désaxage STP0, un opérateur déplace le portant 60 par rapport au socle 61 et donc par rapport à un élément de châssis immobile dans le référentiel du banc d'essais.

Ensuite, l'opérateur fixe l'amortisseur 80 au premier connecteur 15 et au deuxième connecteur 25. Le cas échéant, l'opérateur agence divers senseurs de surveillance 43-46 sur voire dans l'amortisseur 80.

Le moteur 35, voire la motorisation 36 non illustrée sur la figure 7, sont mis en route. L'amortisseur 80 effectue alors un mouvement ROT dans le volume cylindrique. En présence de la motorisation 36, cette motorisation 36 peut être pilotée pour simuler des rafales de vent. Eventuellement, le ventilateur et/ou la caméra éventuels sont mis en route.

En raison du désaxage du deuxième axe AX2 de rotation du deuxième support 20 par rapport au premier axe AX1, le premier support 10 et le deuxième support 20 effectuent des mouvements relatifs en comprimant et en étirant successivement l'amortisseur 80. La raideur torsionnelle de la transmission 50 éventuelle ainsi que les inerties des supports peuvent être optimisées pour garder constante dans le temps la relation entre l'excentricité E et la course de l'amortisseur 80.

En présence d'une fuite hydraulique éventuelle, le fluide éjecté tombe dans la goulotte 30. Eventuellement, le contrôleur 33 coupe le moteur 35, voire le cas échéant la motorisation 36, en présence d'une fuite, voire d'une fuite générant un volume de fluide récolté par la goulotte 30 supérieur à un seuil.

Le moteur 35 peut être dimensionné pour vaincre les efforts de frictions des paliers 13, 23, voire pour que l'éventuelle partie ressort de l'amortisseur 80 soit comprimée et/ou pour vaincre les efforts dus au laminage de l'huile dans une éventuelle partie hydraulique de l'amortisseur 80.

Hormis la friction des paliers 13, 23 qui peut être une constante dans le temps, les efforts de la partie ressort et de la partie amortissement de l'amortisseur 80 sont déphasés. Le moteur 35 peut alors avoir une puissance modérée pour permettre de tester correctement un amortisseur 80. Toutefois, le moteur 35 peut être surdimensionné pour prendre en compte les phases transitoires de démarrage ou de modifications de vitesse et/ou pour réaliser des essais durant une durée importante. En outre, la puissance dissipée par l'amortisseur 80 correspond alors à la puissance mécanique apportée par le moteur 35.

Les paliers 13, 23 peuvent être dimensionnés en fonction des efforts statiques dus à la masse des supports 10, 20, mais aussi des efforts exercés par l'amortisseur 80 sur les supports 10, 20 durant le test. A l'instar du moteur 35, les paliers 13, 23 peuvent être surdimensionnés.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles.

## Revendications

1. Banc d'essais (1) configuré pour tester un amortisseur (80) de traînée,
**caractérisé en ce que** le banc d'essais (1) comporte un premier support (10) rendu mobile en rotation autour d'un premier axe (AX1) de rotation par un moteur (35), le banc d'essais (1) comportant un deuxième support (20) mobile en rotation autour d'un deuxième axe (AX2), le deuxième axe (AX2) étant désaxé par rapport au premier axe (AX1), le banc d'essais (1) comprenant un premier connecteur (15) solidaire du premier support (10) et un deuxième connecteur (25) solidaire du deuxième support (20), le premier connecteur (15) et le deuxième connecteur (25) étant décalés du premier axe (AX1) et du deuxième axe (AX2), le premier connecteur (15) et le deuxième connecteur (25) étant en regard l'un de l'autre selon un axe d'agencement (AXAMORT) et étant configurés pour porter ledit amortisseur (80) selon ledit axe d'agencement (AXAMORT).

2. Banc d'essais selon la revendication 1,
**caractérisé en ce que** ledit banc d'essais (1) comporte une goulotte (30) annulaire fixe de collecte de liquide, ladite goulotte (30) annulaire entourant le premier support (10) et le deuxième support (20) dans un plan radial (95) orthogonal au premier axe (AX1).

3. Banc d'essais selon la revendication 2,
**caractérisé en ce que** ledit banc d'essais (1) comporte un senseur de mesure (32) mesurant une présence de fluide dans la goulotte (30) ou dans un drain (31) de la goulotte (30), ledit senseur de mesure (32) communiquant avec un contrôleur (33) d'arrêt apte à piloter un arrêt automatique dudit moteur (35).

4. Banc d'essais selon l'une quelconque des revendications 1 à 3,
**caractérisé en ce que** le banc d'essais (1) comporte au moins un senseur de surveillance à choisir dans une liste comprenant : un senseur de température (43) à agencer sur l'amortisseur (80), un senseur de déplacement (44) à agencer sur l'amortisseur (80), un senseur de pression (45) à agencer sur l'amortisseur (80), un senseur d'efforts (46) à agencer sur l'amortisseur (80).

5. Banc d'essais selon l'une quelconque des revendications 1 à 4,
**caractérisé en ce que** le banc d'essais (1) comporte au moins un palier (23) portant un arbre (22) solidaire en rotation du deuxième support (20), ledit banc d'essais (1) comprenant un collecteur tournant (41) électrique ou optique solidaire dudit arbre (22) et un collecteur non tournant (42), le collecteur tournant (41) étant relié à au moins un senseur de surveillance (43, 44, 45, 46).

6. Banc d'essais selon l'une quelconque des revendications 1 à 5,
**caractérisé en ce que** ledit premier support (10) et ledit deuxième support (20) sont synchronisés en rotation en phase.

7. Banc d'essais selon l'une quelconque des revendications 1 à 6,
**caractérisé en ce que** ledit banc d'essais (1) comporte une transmission (50) reliant le premier support (10) au deuxième support (20), la transmission (50) étant déformable pour au moins conférer un degré de liberté restreinte au deuxième support (20) par rapport au premier support (10).

8. Banc d'essais selon l'une quelconque des revendications 1 à 7,
**caractérisé en ce que** ledit banc d'essais (1) comporte une motorisation (36) mettant en rotation le deuxième support (20).

9. Banc d'essais selon l'une quelconque des revendications 1 à 8,
**caractérisé en ce que** ledit premier axe (AX1) est fixe dans un référentiel (X, Y, Z) du banc d'essais (1), le deuxième support (20) étant porté par un portant (60) mobile par rapport à un socle (61) fixe dans un référentiel du banc d'essais pour désaxer le deuxième axe (AX2) par rapport au premier axe (AX1).

10. Banc d'essais selon la revendication 9,
**caractérisé en ce que** le banc d'essais (1) comporte un arbre (22) solidaire en rotation du deuxième support (20) et guidé en rotation autour du deuxième axe (AX2) par au moins un palier (23), le palier (23) étant solidaire du portant (60), une position du portant (60) par rapport au socle (61) étant réglable selon au moins un axe (Y, Z) non parallèle au premier axe (AX1) pour ajuster un désaxage du deuxième axe (AX2) par rapport au premier axe (AX1).

11. Banc d'essais selon l'une quelconque des revendications 1 à 10,
**caractérisé en ce que** le premier connecteur (15) et le deuxième connecteur (25) comportent chacun une chape (16, 26) traversée par une broche (17, 27) qui s'étend parallèlement au premier axe (AX1) pour traverser un embout à rotule (83, 84) de l'amortisseur (80).

12. Banc d'essais selon l'une quelconque des revendications 1 à 11,
**caractérisé en ce que** le premier support (10) et le deuxième support (20) sont imbriqués l'un dans l'autre dans un plan radial (95) orthogonal au premier axe (AX1), un support desdits premier et deuxième supports (10,20) traversant un passage (90) de l'autre support (10,20) orthogonalement au premier axe (AX1).

13. Banc d'essais selon l'une quelconque des revendications 1 à 12,
**caractérisé en ce que** le premier connecteur (15) et le deuxième connecteur (25) sont amovibles.

14. Banc d'essais selon l'une quelconque des revendications 1 à 13,
**caractérisé en ce que** le banc d'essais (1) comporte un ventilateur (71) orienté vers le premier support (10) et le deuxième support (20).

15. Banc d'essais selon l'une quelconque des revendications 1 à 14,
**caractérisé en ce que** le banc d'essais (1) comporte une caméra (72) mobile en rotation autour du premier axe (AX1) ou du deuxième axe (AX2) et orienté au moins vers un espace compris entre le premier connecteur (15) et le deuxième connecteur (25).

## Patentansprüche

1. Prüfstand (1), der zum Testen eines Schwenkbewegungsdämpfers (80) konfiguriert ist,
**dadurch gekennzeichnet, dass** der Prüfstand (1) einen ersten Träger (10) umfasst, der durch einen Motor (35) um eine erste Drehachse (AX1) drehbeweglich gemacht ist, und der Prüfstand (1) einen zweiten Träger (20) umfasst, der um eine zweite Achse (AX2) drehbeweglich ist, wobei die zweite Achse (AX2) in Bezug auf die erste Achse (AX1) achsversetzt ist, dass der Prüfstand (1) einen ersten Verbinder (15), der fest mit dem ersten Träger (10) verbunden ist, und einen zweiten Verbinder (25), der fest mit dem zweiten Träger (20) verbunden ist, umfasst, wobei der erste Verbinder (15) und der zweite Verbinder (25) gegen die erste Achse (AX1) und die zweite Achse (AX2) verschoben sind, wobei der erste Verbinder (15) und der zweite Verbinder (25) einander entlang einer Anordnungsachse (AXAMORT) gegenüberliegen und konfiguriert sind, um den Dämpfer (80) entlang dieser Anordnungsachse (AXAMORT) zu tragen.

2. Prüfstand nach Anspruch 1,
**dadurch gekennzeichnet, dass** der Prüfstand (1) eine ortsfeste ringförmige Rinne (30) zum Sammeln von Flüssigkeit aufweist, wobei die ringförmige Rinne (30) den ersten Träger (10) und den zweiten Träger (20) in einer zur ersten Achse (AX1) orthogonalen Radialebene (95) umgibt.

3. Prüfstand nach Anspruch 2,
**dadurch gekennzeichnet, dass** der Prüfstand (1) einen Messsensor (32) umfasst, der ein Vorhandensein von Fluid in der Rinne (30) oder in einem Abfluss (31) der Rinne (30) misst, wobei der Messsensor (32) mit einer Anhaltesteuereinheit (33) kommuniziert, die geeignet ist, ein automatisches Anhalten des Motors (35) zu steuern.

4. Prüfstand nach einem der Ansprüche 1 bis 3,
**dadurch gekennzeichnet, dass** der Prüfstand (1) mindestens einen Überwachungssensor umfasst, der aus einer Liste auszuwählen ist, die umfasst: einen am Dämpfer (80) anzubringenden Temperatursensor (43), einen am Dämpfer (80) anzubringenden Verschiebungssensor (44), einen am Dämpfer (80) anzubringenden Drucksensor (45), einen am Dämpfer (80) anzubringenden Kraftsensor (46).

5. Prüfstand nach einem der Ansprüche 1 bis 4,
**dadurch gekennzeichnet, dass** der Prüfstand (1) mindestens ein Lager (23) umfasst, das eine drehfest mit dem zweiten Träger (20) verbundene Welle (22) trägt, wobei der Prüfstand (1) einen drehbaren elektrischen oder optischen Kollektor (41), der fest mit der Welle (22) verbunden ist, und einen nicht drehbaren Kollektor (42) umfasst, wobei der drehbare Kollektor (41) mit mindestens einem Überwachungssensor (43, 44, 45, 46) verbunden ist.

6. Prüfstand nach einem der Ansprüche 1 bis 5,
**dadurch gekennzeichnet, dass** der erste Träger (10) und der zweite Träger (20) in ihrer Phasendrehung synchronisiert sind.

7. Prüfstand nach einem der Ansprüche 1 bis 6,
**dadurch gekennzeichnet, dass** der Prüfstand (1) ein Getriebe (50) aufweist, das den ersten Träger (10) mit dem zweiten Träger (20) verbindet, wobei das Getriebe (50) verformbar ist, um dem zweiten Träger (20) in Bezug auf den ersten Träger (10) zumindest einen eingeschränkten Freiheitsgrad zu verleihen.

8. Prüfstand nach einem der Ansprüche 1 bis 7,
**dadurch gekennzeichnet, dass** der Prüfstand (1) einen Antrieb (36) umfasst, der den zweiten Träger (20) in Drehung versetzt.

9. Prüfstand nach einem der Ansprüche 1 bis 8,
**dadurch gekennzeichnet, dass** die erste Achse (AX1) in einem Bezugssystem (X, Y, Z) des Prüfstands (1) ortsfest ist, wobei der zweite Träger (20) von einer Stütze (60) getragen ist, die in Bezug auf einen in einem Bezugssystem des Prüfstands ortsfesten Sockel (61) beweglich ist, um die zweite Achse (AX2) gegen die erste Achse (AX1) zu versetzen.

10. Prüfstand nach Anspruch 9,
**dadurch gekennzeichnet, dass** der Prüfstand (1) eine Welle (22) umfasst, die drehfest mit dem zweiten Träger (20) verbunden ist und durch mindestens ein Lager (23) in Drehung um die zweite Achse (AX2) geführt ist, wobei das Lager (23) fest mit der Stütze (60) verbunden ist, wobei eine Position der Stütze (60) in Bezug auf den Sockel (61) entlang mindestens einer Achse (Y, Z), die nicht parallel zur ersten Achse (AX1) verläuft, einstellbar ist, um einen Achsversatz der zweiten Achse (AX2) in Bezug auf die erste Achse (AX1) anzupassen.

11. Prüfstand nach einem der Ansprüche 1 bis 10,
**dadurch gekennzeichnet, dass** der erste Verbinder (15) und der zweite Verbinder (25) jeweils einen Gabelkopf (16, 26) aufweisen, durch den ein Stift (17, 27) verläuft, der sich parallel zur ersten Achse (AX1) erstreckt, um einen Kugelkopf (83, 84) des Dämpfers (80) zu durchdringen.

12. Prüfstand nach einem der Ansprüche 1 bis 11,
**dadurch gekennzeichnet, dass** der erste Träger (10) und der zweite Träger (20) in einer zur ersten Achse (AX1) orthogonalen Radialebene (95) ineinander verschachtelt sind, wobei von erstem und zweitem Träger (10, 20) der eine Träger durch einen Durchgang (90) des anderen Trägers (10, 20) orthogonal zur ersten Achse (AX1) verläuft.

13. Prüfstand nach einem der Ansprüche 1 bis 12,
**dadurch gekennzeichnet, dass** der erste Verbinder (15) und der zweite Verbinder (25) abnehmbar sind.

14. Prüfstand nach einem der Ansprüche 1 bis 13,
**dadurch gekennzeichnet, dass** der Prüfstand (1) einen auf den ersten Träger (10) und den zweiten Träger (20) gerichteten Ventilator (71) aufweist.

15. Prüfstand nach einem der Ansprüche 1 bis 14,
**dadurch gekennzeichnet, dass** der Prüfstand (1) eine Kamera (72) umfasst, die um die erste Achse (AX1) oder die zweite Achse (AX2) drehbar ist und zumindest auf einen Raum zwischen dem ersten Verbinder (15) und dem zweiten Verbinder (25) gerichtet ist.

## Claims

1. Test bench (1) configured to test a drag damper (80),
**characterised in that** the test bench (1) comprises a first support (10) capable of being rotated about a first axis (AX1) of rotation by a motor (35), the test bench (1) comprising a second support (20) rotatable about a second axis (AX2), the second axis (AX2) being offset axially in respect of the first axis (AX1), the test bench (1) comprising a first connector (15) secured to the first support (10) and a second connector (25) secured to the second support (20), the first connector (15) and the second connector (25) being offset from the first axis (AX1) and second axis (AX2), the first connector (15) and the second connector (25) being opposite each other along an arrangement axis (AXAMORT) and being configured to carry said damper (80) along said arrangement axis (AXAMORT).

2. Test bench according to claim 1,
**characterised in that** said test bench (1) comprises a fixed annular channel (30) for collecting liquid, said annular channel (30) surrounding the first support (10) and the second support (20) in a radial plane (95) orthogonal to the first axis (AX1).

3. Test bench according to claim 2,
**characterised in that** said test bench (1) comprises a measurement sensor (32) measuring a presence of fluid in the channel (30) or in a drain (31) of the channel (30), said measurement sensor (32) communicating with a shutdown controller (33) capable of triggering an automatic shutdown of the motor (35).

4. Test bench according to any one of claims 1 to 3,
**characterised in that** the test bench (1) comprises at least one monitoring sensor to be chosen from a list comprising: a temperature sensor (43) to be arranged on the damper (80), a movement sensor (44) to be arranged on the damper (80), a pressure sensor (45) to be arranged on the damper (80), and a force sensor (46) to be arranged on the damper (80).

5. Test bench according to any one of claims 1 to 4,
**characterised in that** the test bench (1) comprises at least one bearing (23) carrying a shaft (22) secured for rotation with the second support (20), said test bench (1) comprising a rotating electrical or optical collector (41) secured to said shaft (22) and a non-rotating collector (42), the rotating collector (41) being connected to at least one monitoring sensor (43, 44, 45, 46).

6. Test bench according to any one of claims 1 to 5,
**characterised in that** said first support (10) and said second support (20) are synchronised to rotate in phase.

7. Test bench according to any one of claims 1 to 6,
**characterised in that** said test bench (1) comprises a transmission device (50) linking the first support (10) to the second support (20), the transmission device (50) being deformable in order to at least give the second support (20) a restricted degree of freedom in respect of the first support (10).

8. Test bench according to any one of claims 1 to 7,
**characterised in that** said test bench (1) comprises a drive unit (36) setting the second support (20) in rotation.

9. Test bench according to any one of claims 1 to 8,
**characterised in that** said first axis (AX1) is fixed in a reference frame (X, Y, X) of the test bench (1), the second support (20) being carried by a support member (60) capable of movement in respect of a base (61) which is fixed in a reference frame of the test bench in order to offset the second axis (AX2) axially in relation to the first axis (AX1).

10. Test bench according to claim 9,
**characterised in that** the test bench (1) comprises a shaft (22) secured for rotation with the second support (20) and guided in rotation about the second axis (AX2) by at least one bearing (23), the bearing (23) being secured to the support member (60), a position of the support member (60) in respect of the base (61) being adjustable according to at least one axis (Y, Z) not parallel to the first axis (AX1) in order to adjust an axial offset of the second axis (AX2) in respect of the first axis (AX1).

11. Test bench according to any one of claims 1 to 10,
**characterised in that** the first connector (15) and the second connector (25) each comprise a cope (16, 26) traversed by a pin (17, 27) which extends parallel to the first axis (AX1) so as to pass through a ball-and-socket fitting (83, 84) of the damper (80).

12. Test bench according to any one of claims 1 to 11,
**characterised in that** the first support (10) and the second support (20) are nested in one another in a radial plane (95) orthogonal to the first axis (AX1), one of said first and second supports (10, 20) passing through a passage (90) of the other support (10, 20) orthogonally to the first axis (AX1).

13. Test bench according to any one of claims 1 to 12,
**characterised in that** the first connector (15) and the second connector (25) are removable.

14. Test bench according to any one of claims 1 to 13,
**characterised in that** the test bench (1) comprises a fan (71) turned towards the first support (10) and the second support (20).

15. Test bench according to any one of claims 1 to 14,
**characterised in that** the test bench (1) comprises a camera (72) which capable of rotation about the first axis (AX1) or the second axis (AX2) and turned at least towards a space situated between the first connector (15) and the second connector (25).
